# EUROPEAN PATENT APPLICATION

(11) **EP 4 362 273 A1**
(43) Date of publication of application: **01.05.2024**
(21) Application number: 23203179.9
(22) Date of filing: 12.10.2023
(51) Int. Cl.: H02J 7/00, H02J 7/34, H02M 1/32, H02M 3/00

(54) **ENERGY STORAGE MODULE WITH BYPASS CIRCUIT**

(30) Priority: 21.10.2022 CN 202211295175; 02.03.2023 CN 202310194437
(71) Applicant: Delta Electronics (Shanghai) Co., Ltd., Shanghai 201209 (CN)
(72) Inventor: Zhang, Tengshen, Shanghai 201209 (CN); Wang, Yafeng, Shanghai 201209 (CN); Zhong, Linfeng, Shanghai 201209 (CN); Zhang, Jinfa, Shanghai 201209 (CN); Xia, Junhao, Shanghai 201209 (CN)
(74) Representative: Uexküll & Stolberg

(57) **Abstract**

An energy storage module (1) with bypass circuit (3) is provided. The energy storage module (1) includes a first battery pack (2), a first capacitor (C1), a bypass circuit (3) and a bidirectional isolated converter (4). The first capacitor (C1) is electrically connected between the positive bus connection terminal (BUS+) and the first positive battery terminal (B+) or between the negative bus connection terminal (BUS-) and the first negative battery terminal (B-). The bypass circuit (3) is electrically connected to two terminals of the first capacitor (C1). The first positive and negative connection terminals (A+, A-) of the bidirectional isolated converter (4) are electrically connected to the positive and negative bus connection terminals (BUS+, BUS-) respectively or are electrically connected to the first positive and negative battery terminals (B+, B-) respectively. The second positive and negative connection terminals (C+, C-) of the bidirectional isolated converter (4) are electrically connected to the two terminals of the first capacitor (C1) respectively. When the energy storage module (1) enters a bypass mode, the bypass circuit (3) bypasses the first capacitor (C1).

## Description

### FIELD OF THE INVENTION

The present disclosure relates to an energy storage module, and more particularly to an energy storage module utilizing a bypass circuit to reduce energy losses, protect components and improve energy storage capacity.

### BACKGROUND OF THE INVENTION

Energy storage modules have broad application prospects and are widely used in the fields such as rail transportation, electric power, new energy, electric vehicle, and high-power transmission. The battery energy storage is widely used in the energy storage module due to its superior regulation performance. However, when the battery packs of the energy storage module are coupled to the DC bus at the same time, the difference between the battery packs would cause circulating current between the batteries, which increases loss and reduces lifespan of the battery backs. Therefore, the battery packs need to be coupled to the DC bus through a power converter. However, for conventional energy storage modules, especially those with series-compensation-type power converters, when the output of the energy storage module does not require compensation adjustment, it is difficult to simplify the control of the power converter and reduce energy losses. In addition, when the battery side port or DC bus side port of the energy storage module is short-circuited, the conventional energy storage module is unable to protect the internal components for avoiding damage. Moreover, once the power converter in the energy storage module breaks down, the energy storage module must be shut down, which leads to the loss of energy storage capacity.

Therefore, there is a need of providing an energy storage module in order to overcome the drawbacks of the conventional technologies.

### SUMMARY OF THE INVENTION

The present disclosure provides an energy storage module including a bypass circuit and a bidirectional isolated converter. The bypass circuit is electrically connected to two terminals of a first capacitor. When the energy storage module enters a bypass mode, the first capacitor is bypassed, thereby reducing the energy loss and protecting the components from damage and/or reducing the loss of energy storage capacity.

In accordance with an aspect of the present disclosure, an energy storage module is provided. The energy storage module includes a bus connection part, a first battery pack, a first capacitor, a bypass circuit and a bidirectional isolated converter. The bus connection part includes a positive bus connection terminal and a negative bus connection terminal. The first battery pack is electrically connected between the positive bus connection terminal and the negative bus connection terminal, and includes a first positive battery terminal and a first negative battery terminal. The first capacitor is electrically connected between the positive bus connection terminal and the first positive battery terminal, or is electrically connected between the negative bus connection terminal and the first negative battery terminal. The bypass circuit is electrically connected to a first terminal and a second terminal of the first capacitor. The bidirectional isolated converter includes a first positive connection terminal, a first negative connection terminal, a second positive connection terminal and a second negative connection terminal. The first positive connection terminal and the first negative connection terminal are electrically connected to the positive bus connection terminal and the negative bus connection terminal respectively, or are electrically connected to the first positive battery terminal and the first negative battery terminal respectively. The second positive connection terminal and the second negative connection terminal are electrically connected to the first terminal and the second terminal of the first capacitor respectively. When the energy storage module enters a bypass mode, the bypass circuit bypasses the first capacitor.

In accordance with another aspect of the present disclosure, an energy storage module is provided. The energy storage module includes a bus connection part, a first battery pack, a first capacitor, a bidirectional isolated converter, a first bypass circuit and a second bypass circuit. The bus connection part includes a positive bus connection terminal and a negative bus connection terminal. The first battery pack is electrically connected between the positive bus connection terminal and the negative bus connection terminal, and includes a first positive battery terminal and a first negative battery terminal. The first capacitor is electrically connected between the positive bus connection terminal and the first positive battery terminal, or is electrically connected between the negative bus connection terminal and the first negative battery terminal. The bidirectional isolated converter includes a first positive connection terminal, a first negative connection terminal, a second positive connection terminal and a second negative connection terminal. The first positive connection terminal and the first negative connection terminal are electrically connected to the positive bus connection terminal and the negative bus connection terminal respectively, or are electrically connected to the first positive battery terminal and the first negative battery terminal respectively. The second positive connection terminal and the second negative connection terminal are electrically connected to the first terminal and the second terminal of the first capacitor respectively. The first bypass circuit is disposed outside the bidirectional isolated converter and is electrically connected to the first terminal and the second terminal of the first capacitor. The second bypass circuit is integrated inside the bidirectional isolated converter and is electrically connected to the first terminal and the second terminal of the first capacitor through the second positive connection terminal and the second negative connection terminal respectively. When the energy storage module enters a bypass mode, the first bypass circuit or the second bypass circuit bypasses the first capacitor.

The above contents of the present disclosure will become more readily apparent to those ordinarily skilled in the art after reviewing the following detailed description and accompanying drawings, in which:

### BRIEF DESCRIPTION OF THE DRAWINGS

FIG. 1 is a schematic circuit block diagram illustrating an energy storage module according to a first embodiment of the present disclosure;
FIG. 1A is a schematic circuit block diagram illustrating an energy storage module according to a second embodiment of the present disclosure;
FIG. 1B is a schematic circuit block diagram illustrating an energy storage module according to a third embodiment of the present disclosure;
FIG. 1C is a schematic circuit block diagram illustrating an energy storage module according to a fourth embodiment of the present disclosure;
FIG. 2 is a schematic circuit block diagram illustrating an energy storage module according to a fifth embodiment of the present disclosure;
FIG. 2A is a schematic circuit block diagram illustrating an energy storage module according to a sixth embodiment of the present disclosure;
FIG. 3 to FIG. 3E are schematic circuit diagrams illustrating various implementations of the bypass circuit of the energy storage module shown in FIG. 1;
FIG. 4 is a schematic circuit block diagram illustrating an energy storage module according to a seventh embodiment of the present disclosure;
FIG. 4A is a schematic circuit diagram illustrating a first implementation of the bypass circuit and the bidirectional isolated converter of FIG. 4;
FIG. 4B is a schematic circuit diagram illustrating a second implementation of the bypass circuit and the bidirectional isolated converter of FIG. 4;
FIG. 4C is a schematic circuit diagram illustrating a third implementation of the bypass circuit and the bidirectional isolated converter of FIG. 4;
FIG. 5 is a schematic circuit block diagram illustrating an energy storage module according to an eighth embodiment of the present disclosure;
FIG. 6 is a schematic circuit block diagram illustrating an energy storage module according to a ninth embodiment of the present disclosure;
FIG. 7 is a schematic circuit block diagram illustrating an energy storage module according to a tenth embodiment of the present disclosure;
FIG. 8 shows the detailed circuit structure of the bidirectional isolated converter as a phase-shift full-bridge converter based on the circuit block diagram of the energy storage module of FIG. 1;
FIG. 9 is a schematic circuit block diagram illustrating an energy storage module according to an eleventh embodiment of the present disclosure;
FIG. 10 schematically shows a variant of the bypass circuit of FIG. 4B; and
FIG. 11 schematically shows a variant of the bypass circuit of FIG. 4A.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only. It is not intended to be exhaustive or to be limited to the precise form disclosed.

When one element is described to be "connected to", "coupled to" or "linked to" another element, it shall be understood that one element can be directly connected or coupled to another element, and also can be "connected to", "coupled to" or "linked to" another element via a third element, or the third element may be interposed between one element and another element.

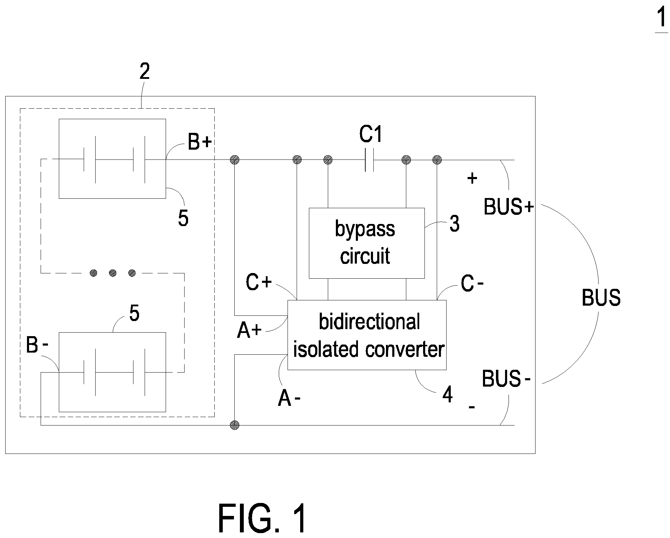

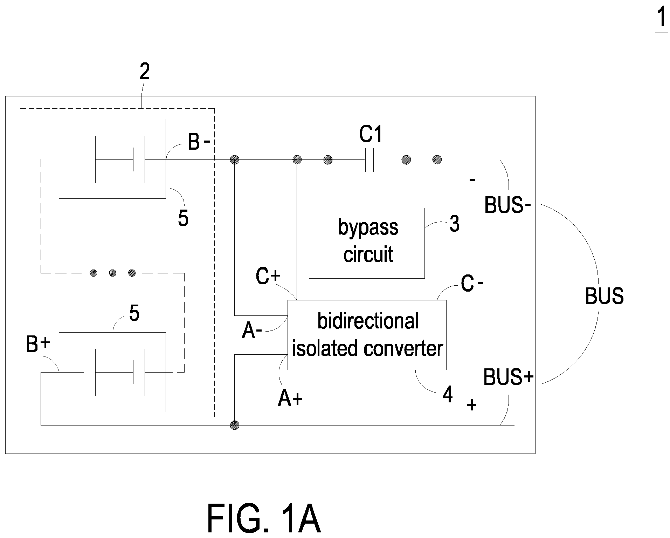

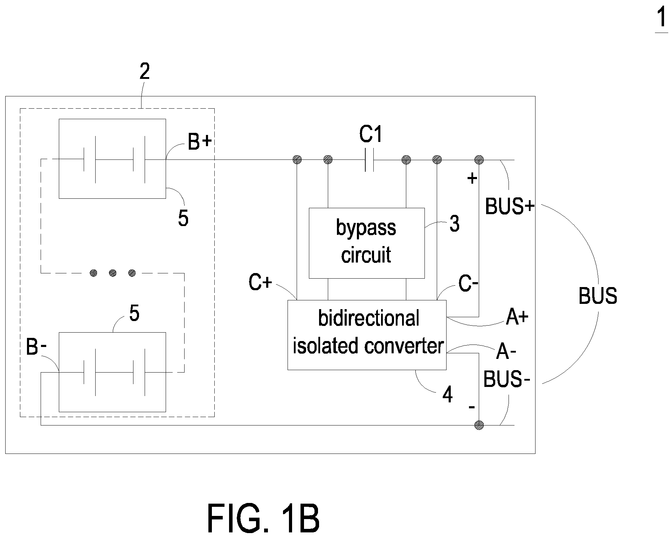

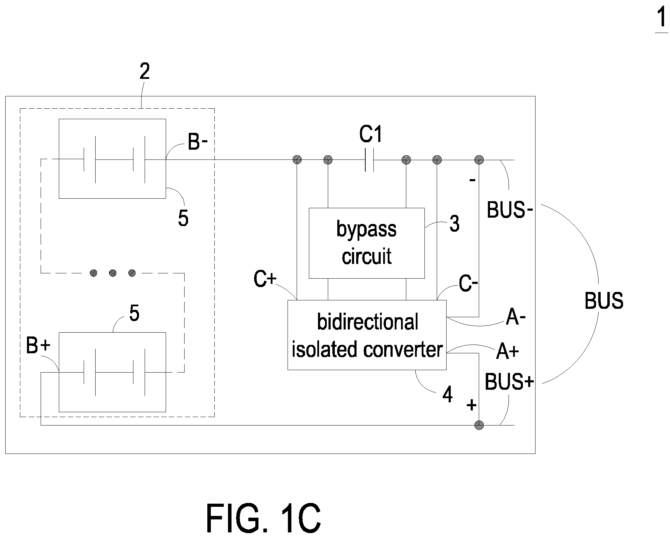

Please refer to FIG. 1. FIG. 1 is a schematic circuit block diagram illustrating an energy storage module according to a first embodiment of the present disclosure. As shown in FIG. 1, in this embodiment, the energy storage module 1 includes a bus connection part BUS, a first battery pack 2, a first capacitor C1, a bypass circuit 3 and a bidirectional isolated converter 4. The bus connection part BUS includes a positive bus connection terminal BUS+ and a negative bus connection terminal BUS-. The first battery pack 2 is electrically connected between the positive bus connection terminal BUS+ and the negative bus connection terminal BUS-, and the first battery pack 2 includes a first positive battery terminal B+ and a first negative battery terminal B-. In an embodiment, the first battery pack 2 includes a plurality of first battery units 5 electrically connected in series, and each first battery unit 5 includes at least one rechargeable battery. The first capacitor C1 is electrically connected between the positive bus connection terminal BUS+ and the first positive battery terminal B+ of the first battery pack 2. The bypass circuit 3 is disposed outside the bidirectional isolated converter 4 and is electrically connected to the first and second terminals of the first capacitor C1. When the energy storage module 1 enters a bypass mode, the bypass circuit 3 connects the first and second terminals of the first capacitor C1 with each other to bypass the first capacitor C1. The bidirectional isolated converter 4 includes a first positive connection terminal A+, a first negative connection terminal A-, a second positive connection terminal C+ and a second negative connection terminal C-. The first positive connection terminal A+ and the first negative connection terminal A- are electrically connected to the first positive battery terminal B+ and the first negative battery terminal B-respectively. The second positive connection terminal C+ and the second negative connection terminal C- are electrically connected to the first and second terminals of the first capacitor C1 respectively.

Please refer to FIG. 1A. FIG. 1A is a schematic circuit block diagram illustrating an energy storage module according to a second embodiment of the present disclosure. In this embodiment, as shown in FIG. 1A, the first capacitor C1 is electrically connected between the negative bus connection terminal BUS- and the first negative battery terminal B- of the first battery pack 2.

Please refer to FIG. 1B. FIG. 1B is a schematic circuit block diagram illustrating an energy storage module according to a third embodiment of the present disclosure. In this embodiment, as shown in FIG. 1B, the first positive connection terminal A+ and the first negative connection terminal A- of the bidirectional isolated converter 4 are electrically connected to the positive bus connection terminal BUS+ and the negative bus connection terminal BUS- respectively, and the first capacitor C1 is electrically connected between the positive bus connection terminal BUS+ and the first positive battery terminal B+.

Please refer to FIG. 1C. FIG. 1C is a schematic circuit block diagram illustrating an energy storage module according to a fourth embodiment of the present disclosure. In this embodiment, as shown in FIG. 1C, the first positive connection terminal A+ and the first negative connection terminal A- of the bidirectional isolated converter 4 are electrically connected to the positive bus connection terminal BUS+ and the negative bus connection terminal BUS- respectively, and the first capacitor C1 is electrically connected between the negative bus connection terminal BUS- and the first negative battery terminal B-.

Please refer to FIG. 1 again. In the embodiment shown in FIG. 1, when the energy storage module 1 enters the bypass mode, the bypass circuit 3 bypasses the first capacitor C1. On the contrary, when the energy storage module 1 exits the bypass mode, the first capacitor C1 participates in the charging and discharging operation of the energy storage module 1. In addition, in an embodiment, when a first capacitor voltage of the first capacitor C1 is lower than a preset threshold, or when a short circuit occurs between the first positive battery terminal B+ and the first negative battery terminal B-, or when a short circuit occurs between the positive bus connection terminal BUS+ and the negative bus connection terminal BUS-, or when the bidirectional isolated converter 4 breaks down, the energy storage module 1 enters the bypass mode.

As shown in FIG. 1, FIG. 1A, FIG. 1B and FIG. 1C, the first positive connection terminal A+ and the first negative connection terminal A- of the bidirectional isolated converter 4 are electrically connected to the first positive battery terminal B+ and the first negative battery terminal B-respectively, or are electrically connected to the positive bus connection terminal BUS+ and the negative bus connection terminal BUS- respectively. The second positive connection terminal C+ and the second negative connection terminal C- of the bidirectional isolated converter 4 are electrically connected to two terminals of the first capacitor C1 respectively. Therefore, the bidirectional isolated converter 4 is a series-compensation-type converter. The bidirectional isolated converter 4 may control the first capacitor C1 to form a compensation voltage for compensating the voltage across the first battery pack 2, or may control the current flowing through the first battery pack 2 to be a preset value.

According to the descriptions above, in some embodiments, the bypass circuit 3 is disposed outside the bidirectional isolated converter 4 and is electrically connected to two terminals of the first capacitor C1. When the first capacitor voltage of the first capacitor C1 is lower than the preset threshold, the energy storage module 1 enters the bypass mode. Under this circumstance, as the output of the energy storage module 1 does not need compensation, the bypass circuit 3 bypasses the first capacitor C1, thereby simplifying the control of the bidirectional isolated converter 4 and reducing the energy loss of the energy storage module 1. In addition, when a short circuit occurs between the first positive battery terminal B+ and the first negative battery terminal B- or when a short circuit occurs between the positive bus connection terminal BUS+ and the negative bus connection terminal BUS-, the bypass circuit 3 also bypasses the first capacitor C1. Therefore, the bypass current flows through the bypass circuit 3 instead of the first capacitor C1, so that the first capacitor C1 and the internal components of the bidirectional isolated converter 4 are protected. Moreover, when the bidirectional isolated converter 4 breaks down, the bypass circuit 3 bypasses the first capacitor C1 and the bidirectional isolated converter 4, and the electric energy of the first battery pack 2 is transmitted to the output of the energy storage module 1 through the bypass circuit 3, so that the energy storage module 1 is ensured to operate normally without losing energy capacity.

The bypass circuit 3 and the bidirectional isolated converter 4 are disposed separately in the above embodiments, but not limited thereto. Other possible embodiments would be described later.

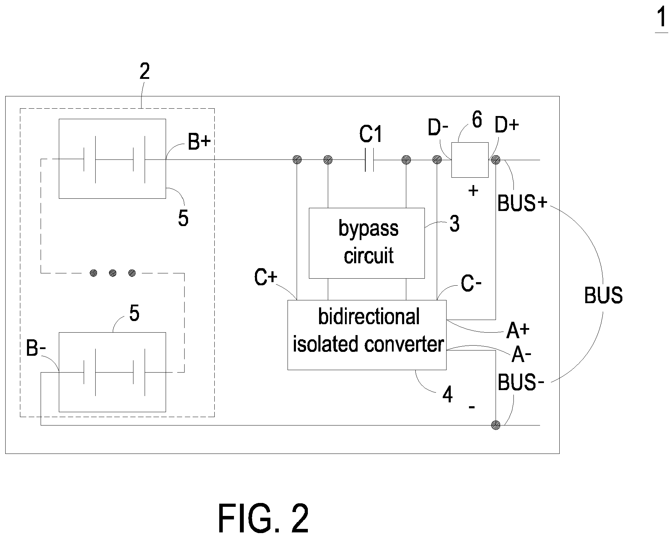

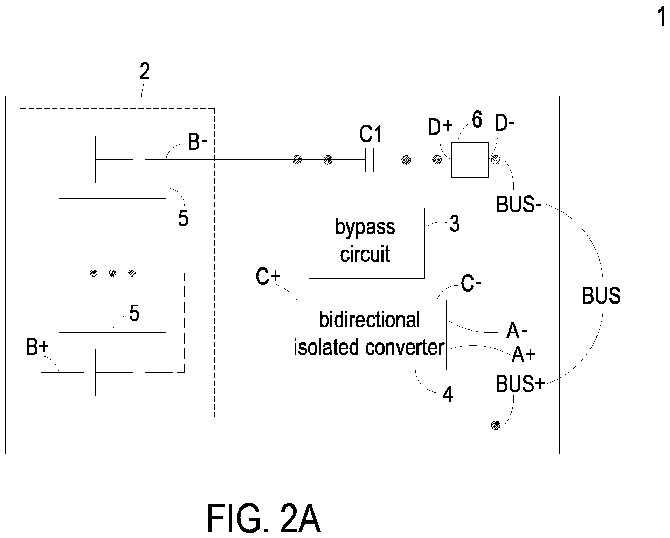

Please refer to FIG. 2. FIG. 2 is a schematic circuit block diagram illustrating an energy storage module according to a fifth embodiment of the present disclosure. In this embodiment, the energy storage module 1 further includes a second battery pack 6 electrically connected between the first capacitor C1 and the bus connection part BUS. The second battery pack 6 includes a second positive battery terminal D+ and a second negative battery terminal D-. The first capacitor C1 is electrically connected between the first positive battery terminal B+ of the first battery pack 2 and the second negative battery terminal D- of the second battery pack 6. The second positive battery terminal D+ of the second battery pack 6 is electrically connected to the positive bus connection terminal BUS+. The first positive connection terminal A+ and the first negative connection terminal A- of the bidirectional isolated converter 4 are electrically connected to the positive bus connection terminal BUS+ and the negative bus connection terminal BUS- respectively. The second positive connection terminal C+ and the second negative connection terminal C- of the bidirectional isolated converter 4 are electrically connected to two terminals of the first capacitor C1 respectively.

Please refer to FIG. 2A. FIG. 2A is a schematic circuit block diagram illustrating an energy storage module according to a sixth embodiment of the present disclosure. In this embodiment, the first capacitor C1 is electrically connected between the first negative battery terminal B- of the first battery pack 2 and the second positive battery terminal D+ of the second battery pack 6. The second negative battery terminal D-of the second battery pack 6 is electrically connected to the negative bus connection terminal BUS-. The first positive connection terminal A+ and the first negative connection terminal A- of the bidirectional isolated converter 4 are electrically connected to the positive bus connection terminal BUS+ and the negative bus connection terminal BUS- respectively. The second positive connection terminal C+ and the second negative connection terminal C- of the bidirectional isolated converter 4 are electrically connected to two terminals of the first capacitor C1 respectively.

According to the embodiments shown in FIG. 2 and FIG. 2A, the first positive connection terminal A+ and the first negative connection terminal A- of the bidirectional isolated converter 4 are electrically connected to the positive bus connection terminal BUS+ and the negative bus connection terminal BUS- respectively, and the second positive connection terminal C+ and the second negative connection terminal C- of the bidirectional isolated converter 4 are electrically connected to two terminals of the first capacitor C1 respectively. Therefore, the bidirectional isolated converter 4 is a series-compensation-type converter. The bidirectional isolated converter 4 may control the first capacitor C1 to form a compensation voltage for compensating the sum of the voltage across the first battery pack 2 and the voltage across the second battery pack 6, or may control the current flowing through the first battery pack 2 to be a preset value. In addition, when a short circuit occurs between the second positive battery terminal D+ and the second negative battery terminal D-, the energy storage module 1 may enter the bypass mode to bypass the first capacitor. Accordingly, the bypass current flows through the bypass circuit 3 instead of the first capacitor C1, so that the first capacitor C1 and the internal components of the bidirectional isolated converter 4 are protected.

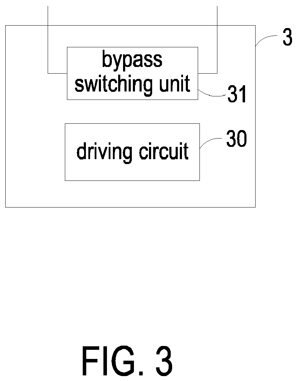

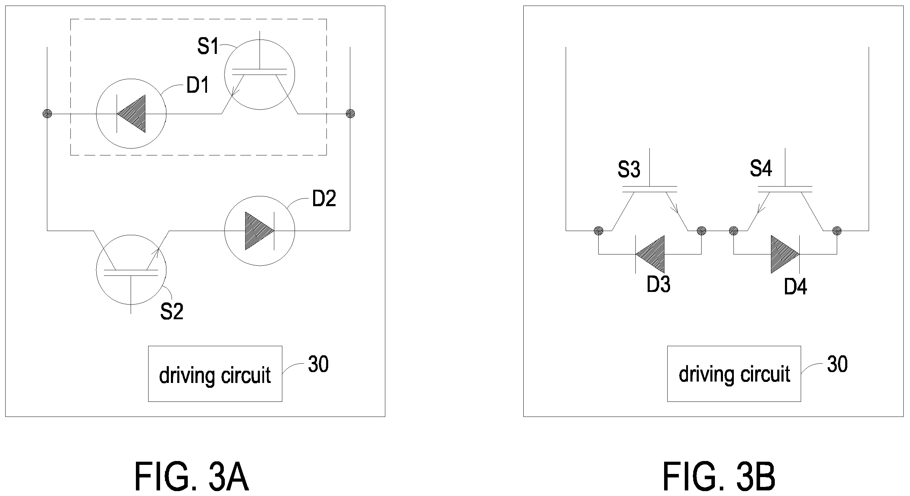

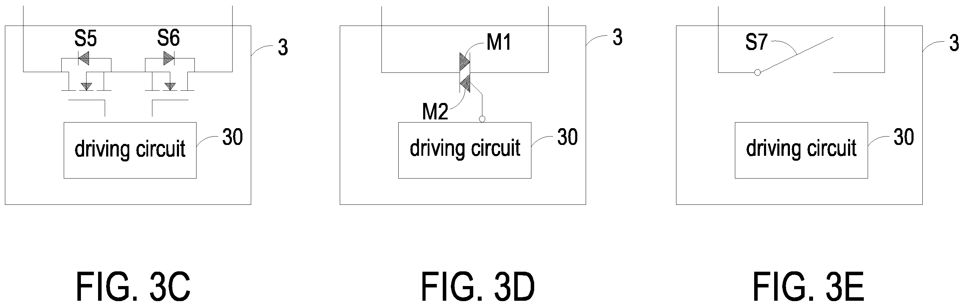

Please refer to FIG. 3. In the embodiment shown in FIG. 3, the bypass circuit 3 is disposed outside the bidirectional isolated converter 4 and includes a driving circuit 30 and a bypass switching unit 31. The driving circuit 30 controls the bypass switching unit 31 to be in an on state or an off state according to whether the energy storage module 1 enters the bypass mode or not.

Please refer to FIG. 3A to FIG. 3E. FIG. 3A to FIG. 3E are schematic circuit diagrams illustrating various implementations of the bypass circuit of the energy storage module shown in FIG. 3. The bypass switching unit 31 includes a bidirectional active switch or a mechanical switch. The driving circuit 30 controls the bidirectional active switch or mechanical switch to turn on for making the energy storage module 1 enter the bypass mode and bypassing the first capacitor C1. When the bidirectional active switch or mechanical switch is turned off, the energy storage module 1 exits the bypass mode. Under this circumstance, the bidirectional isolated converter 4 controls the first capacitor C1 to form a compensation voltage for compensating the voltage across the first battery pack 2, or controls the current flowing through the first battery pack 2 to be a preset value.

In the embodiment shown in FIG. 3A, the bidirectional active switch includes two IGBTs (insulated gate bipolar transistors) S1 and S2 and two diodes D1 and D2. The IGBT S1 is electrically connected in series to the diode D1, and the IGBT S2 is electrically connected in series to the diode D2. The series branch of the IGBT S1 and diode D1 is electrically connected in antiparallel to the series branch of the IGBT S2 and diode D2.

In the embodiment shown in FIG. 3B, the bidirectional active switch includes two IGBTs S3 and S4 and two diodes D3 and D4. The IGBT S3 is integrated with the diode D3, and the IGBT S4 is integrated with the diode D4. The integration of the IGBT S3 and diode D3 is electrically connected in anti-series to the integration of the IGBT S4 and diode D4.

In the embodiment shown in FIG. 3C, the bidirectional active switch includes two MOSFETs (metal-oxide-semiconductor field-effect transistors) S5 and S6 electrically connected in anti-series.

In the embodiment shown in FIG. 3D, the bidirectional active switch includes two thyristors M1 and M2 electrically connected in antiparallel.

In the embodiment shown in FIG. 3E, the bypass switching unit 31 includes a mechanical switch S7, and the driving circuit 30 control the mechanical switch S7 on or off according to whether the energy storage module 1 enters the bypass mode or not.

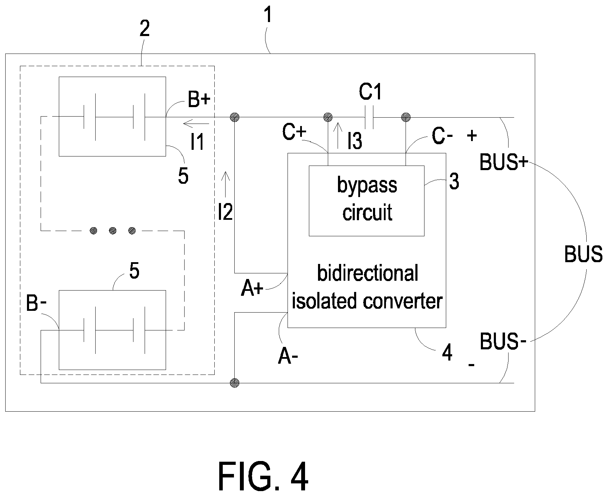

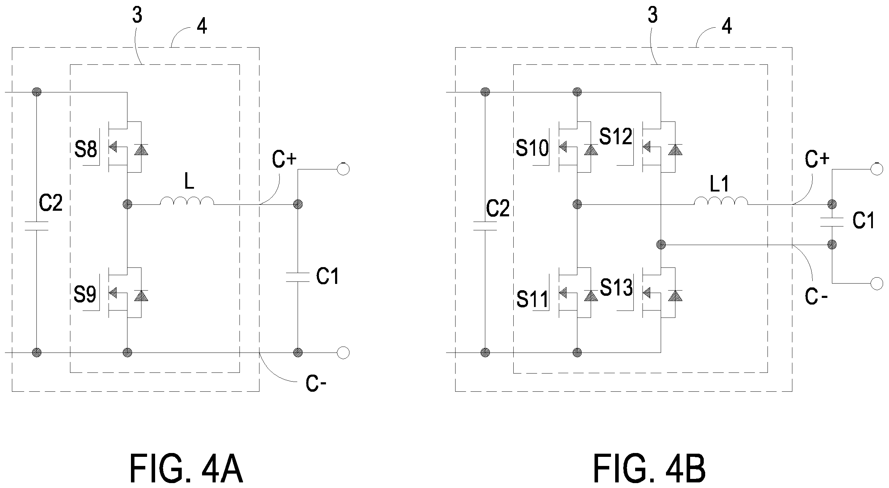

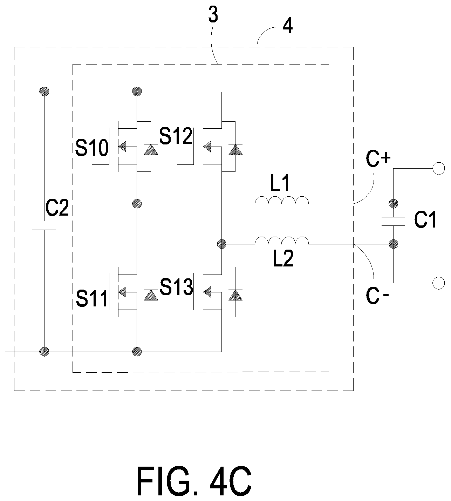

Please refer to FIG. 4 and FIG. 4A. FIG. 4 is a schematic circuit block diagram illustrating an energy storage module according to a seventh embodiment of the present disclosure. FIG. 4A is a schematic circuit diagram illustrating a first implementation of the bypass circuit and the bidirectional isolated converter of FIG. 4. As shown in FIG. 4 and FIG. 4A, in this embodiment, the bypass circuit 3 may be integrated in the bidirectional isolated converter 4, and the bypass circuit 3 is electrically connected to the first and second terminals of the first capacitor C1 through the second positive connection terminal C+ and the second negative connection terminal C- of the bidirectional isolated converter 4. In addition, the bidirectional isolated converter 4 includes a second capacitor C2, and the bypass circuit 3 includes a half-bridge circuit including a bridge arm and an inductor L. The bridge arm and the second capacitor C2 are electrically connected in parallel. The bridge arm includes an upper bridge-arm switch S8 and a lower bridge-arm switch S9 electrically connected in series. Further, two terminals of the lower bridge-arm switch S9 are electrically connected to the first and second terminals of the first capacitor C1 respectively, and the inductor L is electrically connected between a midpoint of the bridge arm and the first terminal of the first capacitor C1.

In this embodiment, when the energy storage module 1 enters the bypass mode, the bypass circuit 3 doesn't perform the half-bridge switching. In particular, the upper bridge-arm switch S8 is turned off continuously, and the lower bridge-arm switch S9 is turned on continuously. Accordingly, the bypass circuit 3 bypasses the first capacitor C1. When the energy storage module 1 exits the bypass mode, the bypass circuit 3 participates in the operation of the bidirectional isolated converter 4 to perform half-bridge switching (i.e., switching the upper bridge-arm switch S8 and lower bridge-arm switch S9 alternately). Consequently, through the operation of the bypass circuit 3, the bidirectional isolated converter 4 controls the first capacitor C1 to form a compensation voltage for compensating the voltage across the first battery pack 2, or controls the current flowing through the first battery pack 2 to be a preset value. In this embodiment, the bypass circuit 3 controls the current I1 flowing through the first battery pack 2 to be a preset value by controlling the current I2 flowing through the first positive connection terminal A+ and the current I3 flowing through the second positive connection terminal C+.

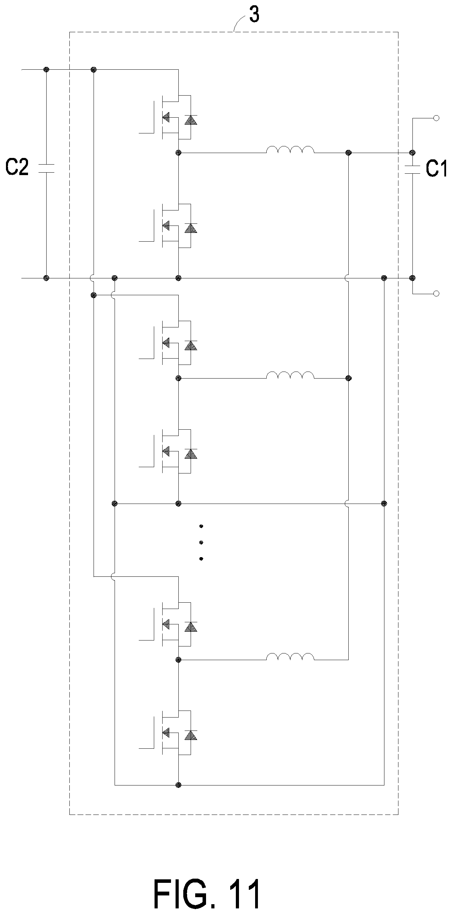

In an embodiment, as shown in FIG. 11, the bypass circuit 3 may include a plurality of half-bridge circuits electrically connected in parallel. In specific, input terminals of the plurality of half-bridge circuits are electrically connected in parallel, and output terminals of the plurality of half-bridge circuits are electrically connected in parallel.

FIG. 4B is a schematic circuit diagram illustrating a second implementation of the bypass circuit and the bidirectional isolated converter of FIG. 4. As shown in FIG. 4B, in an embodiment, the bidirectional isolated converter 4 includes a second capacitor C2, the bypass circuit 3 includes a full-bridge circuit including a first bridge arm, a second bridge arm and a first inductor L1. The first bridge arm includes a first upper bridge-arm switch S10 and a first lower bridge-arm switch S11 electrically connected in series. The second bridge arm includes a second upper bridge-arm switch S12 and a second lower bridge-arm switch S13 electrically connected in series. The second capacitor C2, the first bridge arm and the second bridge arm are electrically connected in parallel. The first terminal of the first inductor L1 is electrically connected to a midpoint of the first bridge arm, the second terminal of the first inductor L1 is electrically connected to the first terminal of the first capacitor C1, and the second terminal of the first capacitor C1 is electrically connected to a midpoint of the second bridge arm.

When the energy storage module 1 enters the bypass mode, the first upper bridge-arm switch S10 and the second upper bridge-arm switch S12 are turned off, and the first lower bridge-arm switch S11 and the second lower bridge-arm switch S13 are turned on. Accordingly, the energy storage module 1 enters the bypass mode, and the first capacitor C1 is bypassed. Afterwards, the voltage of the second capacitor C2 decreases continuously. When the voltage of the second capacitor C2 is lower than a first threshold value, the first upper bridge-arm switch S10 and the second upper bridge-arm switch S12 are turned on. At this time, the bypass circuit 3 can withstand larger bypass current, the bypass effect is better, and the loss of the energy storage module 1 is lower.

Alternatively, when the energy storage module 1 enters the bypass mode, the first lower bridge-arm switch S11 and the second lower bridge-arm switch S 13 are turned off, and the first upper bridge-arm switch S10 and the second upper bridge-arm switch S12 are turned on. Accordingly, the energy storage module 1 enters the bypass mode, and the first capacitor C1 is bypassed. Afterwards, the voltage of the second capacitor C2 decreases continuously. When the voltage of the second capacitor C2 is lower than a first threshold value, the first lower bridge-arm switch S11 and the second lower bridge-arm switch S 13 are turned on. At this time, the bypass circuit 3 can withstand larger bypass current, the bypass effect is better, and the loss of the energy storage module 1 is lower.

When the energy storage module 1 exits the bypass mode, the first upper bridge-arm switch S10 and the second upper bridge-arm switch S12 are turned off, or the first lower bridge-arm switch S11 and the second lower bridge-arm switch S13 are turned off. Accordingly, the second capacitor C2 is charged. When the voltage of the second capacitor C2 is higher than a second threshold value, the energy storage module 1 exits the bypass mode, and the first upper bridge-arm switch S10, the second upper bridge-arm switch S12, the first lower bridge-arm switch S11 and the second lower bridge-arm switch S13 participate in the operation of the bidirectional isolated converter 4 and perform full-bridge switching. Through the operation of the bypass circuit 3, the bidirectional isolated converter 4 controls the first capacitor C1 to form a compensation voltage for compensating the voltage across the first battery pack 2. The compensation voltage may be positive or negative, i.e., the direction of the compensation voltage across the first capacitor C1 and the direction of the voltage across the first battery pack 2 may be identical or opposite. Alternatively, through the operation of the bypass circuit 3, the bidirectional isolated converter 4 controls the current flowing through the first battery pack 2 to be a preset value. In this embodiment, the bypass circuit 3 controls the current I1 flowing through the first battery pack 2 to be a preset value by controlling the current I2 flowing through the first positive connection terminal A+ and the current I3 flowing through the second positive connection terminal C+.

In an embodiment, the first threshold value and the second threshold value may be identical or different.

FIG. 4C is a schematic circuit diagram illustrating a third implementation of the bypass circuit and the bidirectional isolated converter of FIG. 4. Compared with the bypass circuit 3 shown in FIG. 4B, in the embodiment shown in FIG. 4C, the bypass circuit 3 further includes a second inductor L2 electrically connected between the second terminal of the first capacitor C1 and the midpoint of the second bridge arm.

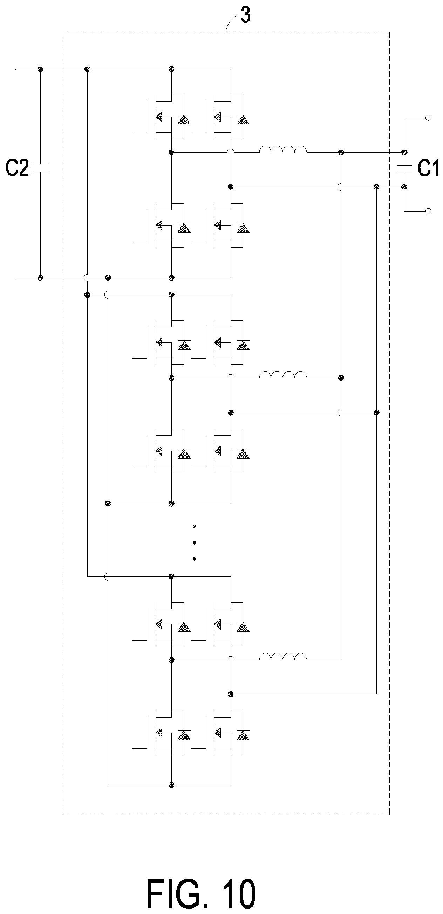

In an embodiment, as shown in FIG. 10, the bypass circuit 3 may include a plurality of full-bridge circuits electrically connected in parallel. Specifically, input terminals of the plurality of full-bridge circuits are electrically connected in parallel, and output terminals of the plurality of full-bridge circuits are electrically connected in parallel.

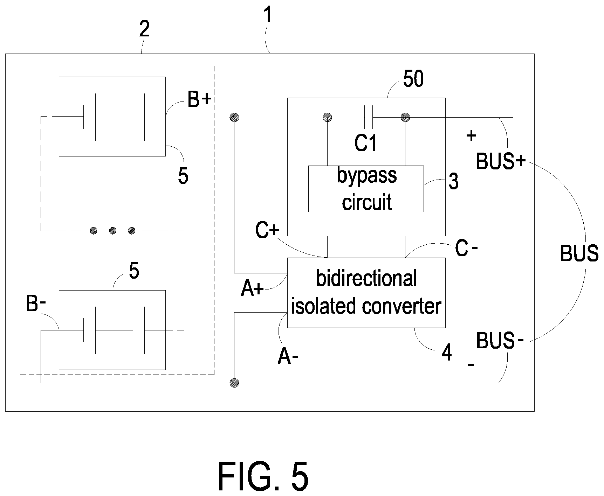

FIG. 5 is a schematic circuit block diagram illustrating an energy storage module according to an eighth embodiment of the present disclosure. In the embodiment shown in FIG. 5, the first capacitor C1 and the bypass circuit 3 of the energy storage module 1 may be integrated together to form an integrated component 50, and the bidirectional isolated converter 4 and the integrated component 50 are disposed separately.

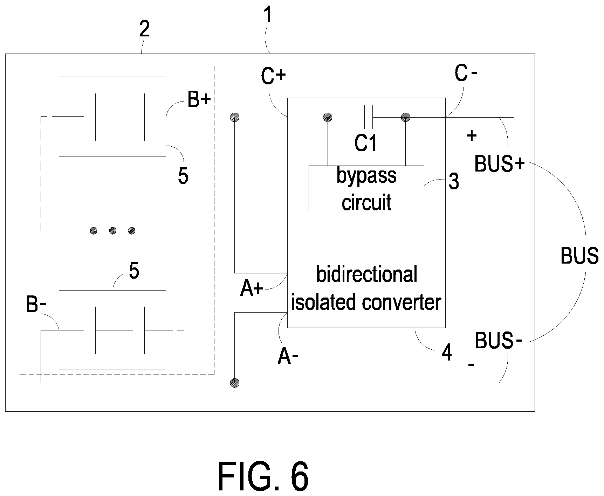

FIG. 6 is a schematic circuit block diagram illustrating an energy storage module according to a ninth embodiment of the present disclosure. In the embodiment shown in FIG. 6, the first capacitor C1 and the bypass circuit 3 may be integrated in the bidirectional isolated converter 4.

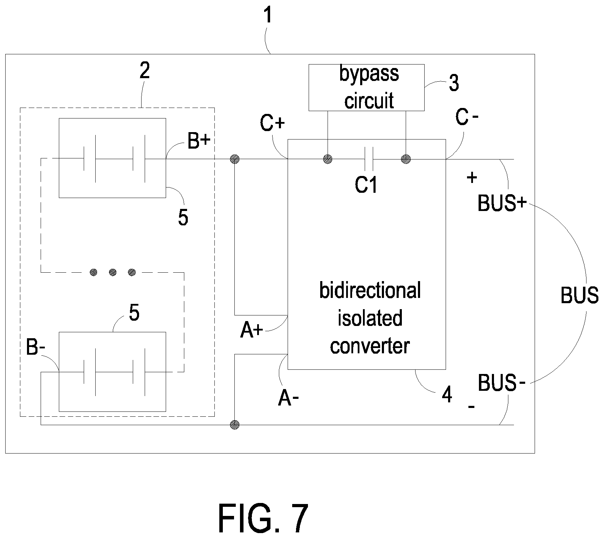

FIG. 7 is a schematic circuit block diagram illustrating an energy storage module according to a tenth embodiment of the present disclosure. In the embodiment shown in FIG. 7, the first capacitor C1 may be integrated in the bidirectional isolated converter 4, and the bidirectional isolated converter 4 and the bypass circuit 3 are disposed separately.

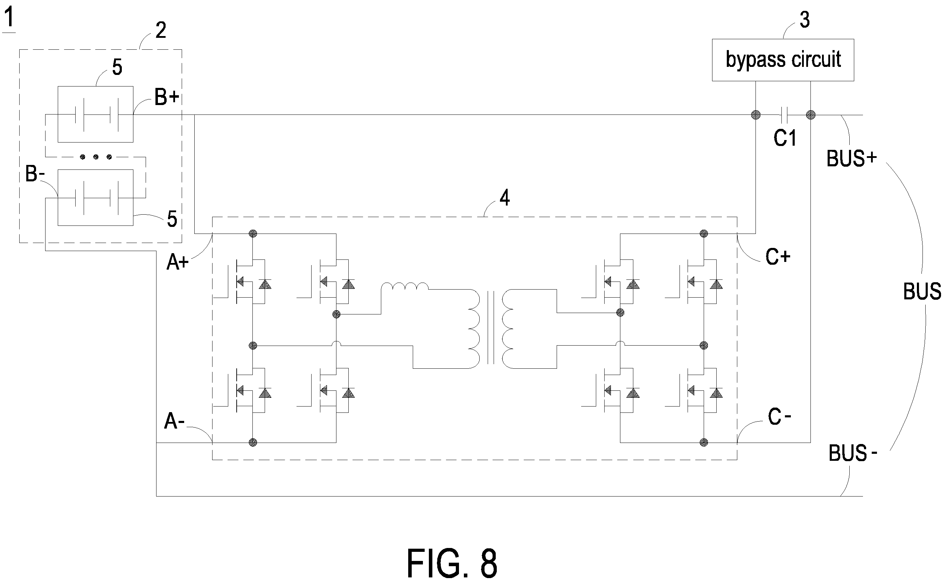

In an embodiment, the bidirectional isolated converter 4 may be a phase-shift full-bridge converter or a bidirectional LLC converter, but not exclusively. Based on the circuit block diagram of the energy storage module 1 of FIG. 1, FIG. 8 further shows the detailed circuit structure of the bidirectional isolated converter 4 as a phase-shift full-bridge converter. Since the circuit structure and operation of the phase-shift full-bridge converter is well-known, the detailed descriptions thereof are omitted herein.

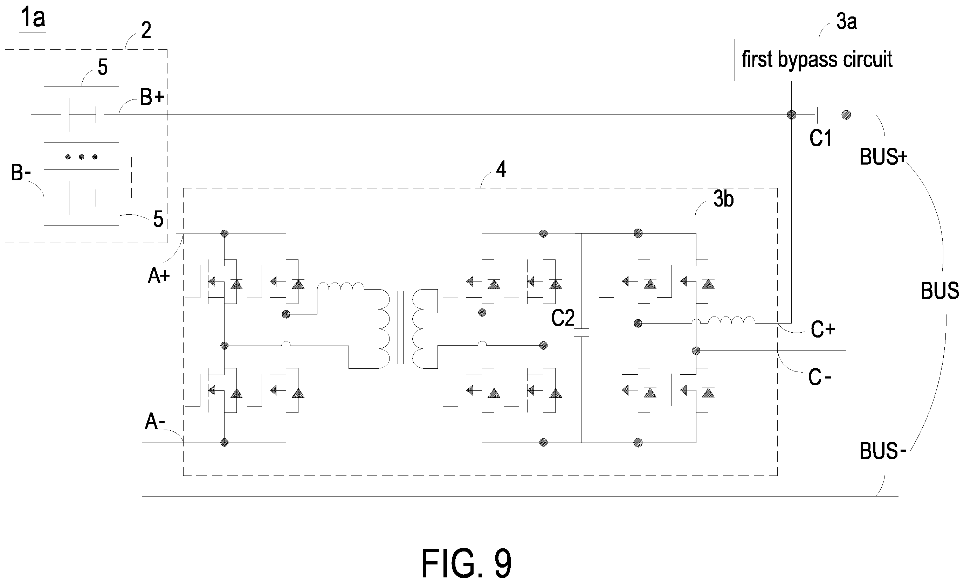

FIG. 9 is a schematic circuit block diagram illustrating an energy storage module according to an eleventh embodiment of the present disclosure. As shown in FIG. 9, in this embodiment, the circuit structure and operation of the energy storage module 1a are similar to that of the energy storage module 1 shown in FIG. 8. Compared with the energy storage module 1 of FIG. 8 which includes one bypass circuit (i.e., the bypass circuit 3), the energy storage module 1a in this embodiment includes two bypass circuits (i.e., the first bypass circuit 3a and the second bypass circuit 3b). The first bypass circuit 3a is disposed outside the bidirectional isolated converter 4, and the second bypass circuit 3b is integrated inside the bidirectional isolated converter 4. The first bypass circuit 3a is electrically connected to two terminals of the first capacitor C1, and the second bypass circuit 3b is electrically connected to two terminals of the first capacitor C1 through the second positive connection terminal C+ and the second negative connection terminal C- of the bidirectional isolated converter 4 respectively. In addition, the circuit structure of the first bypass circuit 3a is similar to that of the bypass circuit 3 shown in FIGS. 3, 3A, 3B, 3C, 3D and 3E, and thus the detailed descriptions thereof are omitted herein. In this embodiment, the circuit structure of the second bypass circuit 3b is similar to that of the bypass circuit 3 shown in FIG. 4B and includes a full-bridge circuit. The full-bridge circuit includes a first bridge arm and a second bridge arm. The second bypass circuit 3b is electrically connected to two terminals of the first capacitor C1 through the second positive connection terminal C+ and the second negative connection terminal C- of the bidirectional isolated converter 4 respectively. In an embodiment, the circuit structure of the second bypass circuit 3b may be similar to that of the bypass circuit 3 shown in FIG. 4A or FIG. 4C, namely including a half-bridge circuit or a full-bridge circuit. Correspondingly, the operation of the second bypass circuit 3b would be similar to that of the bypass circuit 3 shown in FIG. 4A or FIG. 4C, and thus the detailed descriptions thereof are omitted herein.

In an embodiment, the second bypass circuit 3b includes a plurality of half-bridge circuits electrically connected in parallel (as show in FIG. 11). In an embodiment, the second bypass circuit 3b includes a plurality of full-bridge circuits electrically connected in parallel (as show in FIG. 10).

When the energy storage module 1a exits the bypass mode, the first bypass circuit 3a is disconnected, and the second bypass circuit 3b is controlled to participate in the operation of the bidirectional isolated converter 4 of energy storage module 1a and to perform half-bridge switching or full-bridge switching. When the energy storage module 1a enters the bypass mode, one of the first bypass circuit 3a and the second bypass circuit 3b bypasses the first capacitor C1 (i.e., the first bypass circuit 3a or the second bypass circuit 3b bypasses the first capacitor C1). In an embodiment, when the energy storage module 1a enters the bypass mode, the first bypass circuit 3a and the second bypass circuit 3b bypass the first capacitor C1 simultaneously. Therefore, the bypass current or short-circuited current withstood by the bypass circuits is even larger, thereby protecting the first capacitor C1 and the internal components of bidirectional isolated converter 4 of the energy storage module 1a.

In summary, the present disclosure provides an energy storage module including a first battery pack, a first capacitor, a bypass circuit and a bidirectional isolated converter. Two terminals of the first capacitor are electrically connected to the positive bus connection terminal and the first positive battery terminal respectively, or are electrically connected to the negative bus connection terminal and the first negative battery terminal respectively. The first positive connection terminal and the first negative connection terminal of the bidirectional isolated converter are electrically connected to the positive bus connection terminal and the negative bus connection terminal respectively, or are electrically connected to the first positive battery terminal and the first negative battery terminal respectively. The second positive connection terminal and the second negative connection terminal of the bidirectional isolated converter are electrically connected to the two terminals of the first capacitor respectively. The bidirectional isolated converter is a series-compensation-type converter. When the energy storage module enters the bypass mode, the first capacitor is bypassed, thereby reducing the energy loss and avoiding the components from damage and/or reducing the loss of energy storage capacity when the bidirectional isolated converter breaks down and stops operating. When the energy storage module exits the bypass mode, the bidirectional isolated converter controls the first capacitor to form the compensation voltage for compensating the voltage across the first battery pack, or controls the current flowing through the first battery pack to be a preset value.

In addition, the present disclosure further provides another energy storage module including a first battery pack, a first capacitor, a bidirectional isolated converter, a first bypass circuit and a second bypass circuit. Two terminals of the first capacitor are electrically connected to the positive bus connection terminal and the first positive battery terminal respectively, or are electrically connected to the negative bus connection terminal and the first negative battery terminal respectively. The first positive connection terminal and the first negative connection terminal of the bidirectional isolated converter are electrically connected to the positive bus connection terminal and the negative bus connection terminal respectively, or are electrically connected to the first positive battery terminal and the first negative battery terminal respectively. The second positive connection terminal and the second negative connection terminal of the bidirectional isolated converter are electrically connected to the two terminals of the first capacitor respectively. The bidirectional isolated converter is a series-compensation-type converter. The first bypass circuit is disposed outside the bidirectional isolated converter and is electrically connected to the two terminals of the first capacitor. The second bypass circuit is integrated inside the bidirectional isolated converter and is electrically connected to the two terminals of the first capacitor through the second positive connection terminal and the second negative connection terminal respectively. When the energy storage module enters the bypass mode, the first bypass circuit and/or the second bypass circuit bypass(es) the first capacitor. When the energy storage module exits the bypass mode, the bidirectional isolated converter controls the first capacitor to form the compensation voltage for compensating the voltage across the first battery pack, or controls the current flowing through the first battery pack to be a preset value.

## Claims

1. An energy storage module (1), **characterized by** comprising:
a bus connection part (BUS), comprising a positive bus connection terminal (BUS+) and a negative bus connection terminal (BUS-);
a first battery pack (2), electrically connected between the positive bus connection terminal (BUS+) and the negative bus connection terminal (BUS-), and comprising a first positive battery terminal (B+) and a first negative battery terminal (B-);
a first capacitor (C1), electrically connected between the positive bus connection terminal (BUS+) and the first positive battery terminal (B+) or electrically connected between the negative bus connection terminal (BUS-) and the first negative battery terminal (B-);
a bypass circuit (3), electrically connected to a first terminal and a second terminal of the first capacitor (C1); and
a bidirectional isolated converter (4), comprising a first positive connection terminal (A+), a first negative connection terminal (A-), a second positive connection terminal (C+) and a second negative connection terminal (C-), wherein the first positive connection terminal (A+) and the first negative connection terminal (A-) are electrically connected to the positive bus connection terminal (BUS+) and the negative bus connection terminal (BUS-) respectively or are electrically connected to the first positive battery terminal (B+) and the first negative battery terminal (B-) respectively, and the second positive connection terminal (C+) and the second negative connection terminal (C-) are electrically connected to the first terminal and the second terminal of the first capacitor (C1) respectively,
wherein when the energy storage module (1) enters a bypass mode, the bypass circuit (3) bypasses the first capacitor (C1).

2. The energy storage module (1) according to claim 1, further comprising a second battery pack (6) electrically connected between the first capacitor (C1) and the bus connection part (BUS), wherein the second battery pack (6) comprises a second positive battery terminal (D+) and a second negative battery terminal (D-), the first positive connection terminal (A+) and the first negative connection terminal (A-) of the bidirectional isolated converter (4) are electrically connected to the positive bus connection terminal (BUS+) and the negative bus connection terminal (BUS-) respectively, when the first capacitor (C1) is electrically connected between the first positive battery terminal (B+) and the second negative battery terminal (D-), the second positive battery terminal (D+) is electrically connected to the positive bus connection terminal (BUS+); when the first capacitor (C1) is electrically connected between the first negative battery terminal (B-) and the second positive battery terminal (D+), the second negative battery terminal (D-) is electrically connected to the negative bus connection terminal (BUS-),
wherein the energy storage module (1) enters the bypass mode when at least one of bypass conditions is satisfied, and the bypass conditions comprise:
a capacitor voltage of the first capacitor (C1) is lower than a preset threshold;
a short circuit occurs between the first positive battery terminal (B+) and the first negative battery terminal (B-);
a short circuit occurs between the second positive battery terminal (D+) and the second negative battery terminal (D-);
a short circuit occurs between the positive bus connection terminal (BUS+) and the negative bus connection terminal (BUS-); and
the bidirectional isolated converter (4) breaks down,
wherein when the energy storage module (1) exits the bypass mode, the bidirectional isolated converter (4) controls the first capacitor (C1) to form a compensation voltage for compensating a voltage across the first battery pack (2) or controls a current flowing through the first battery pack (2) to be a preset value.

3. The energy storage module (1) according to claim 1, wherein the bypass circuit (3) is disposed outside the bidirectional isolated converter (4) and comprises a driving circuit (30) and a bypass switching unit (31), and the driving circuit (30) controls the bypass switching unit (31) to turn on when the energy storage module (1) enters the bypass mode,
wherein the bypass switching unit (31) comprises a bidirectional active switch or a mechanical switch, and the bidirectional active switch comprises two IGBTs (insulated gate bipolar transistors) (S1, S2), each electrically connected in series to a diode (D1, D2), electrically connected in antiparallel, two IGBTs (S3, S4), each integrated with a diode (D3, D4), electrically connected in anti-series, two MOSFETs (metal-oxide-semiconductor field-effect transistors) (S5, S6) electrically connected in anti-series, or two thyristors (M1, M2) electrically connected in antiparallel.

4. The energy storage module (1) according to claim 1, wherein the bypass circuit (3) is integrated in the bidirectional isolated converter (4), and the bypass circuit (3) is electrically connected to the first terminal and the second terminal of the first capacitor (C1) through the second positive connection terminal (C+) and the second negative connection terminal (C-) respectively.

5. The energy storage module (1) according to claim 4, wherein the bidirectional isolated converter (4) comprises a second capacitor (C2), the bypass circuit (3) comprises a half-bridge circuit comprising a bridge arm and an inductor (L), the bridge arm comprises an upper bridge-arm switch (S8) and a lower bridge-arm switch (S9) electrically connected in series, the bridge arm and the second capacitor (C2) are electrically connected in parallel, two terminals of the lower bridge-arm switch (S9) are electrically connected to the first terminal and the second terminal of the first capacitor (C1) respectively, and the inductor (L) is electrically connected between a midpoint of the bridge arm and the first terminal of the first capacitor (C1),
wherein when the energy storage module (1) enters the bypass mode, the upper bridge-arm switch (S8) is turned off continuously, and the lower bridge-arm switch (S9) is turned on continuously,
wherein when the energy storage module (1) exits the bypass mode, the bypass circuit (3) participates in an operation of the bidirectional isolated converter (4) and performs half-bridge switching.

6. The energy storage module (1) according to claim 5, wherein the bypass circuit (3) comprises a plurality of said half-bridge circuits electrically connected in parallel.

7. The energy storage module (1) according to claim 4, wherein the bidirectional isolated converter (4) comprises a second capacitor (C2), the bypass circuit (3) comprises a full-bridge circuit comprising a first bridge arm, a second bridge arm and a first inductor (L1), the first bridge arm comprises a first upper bridge-arm (S10) switch and a first lower bridge-arm switch (S11) electrically connected in series, the second bridge arm comprises a second upper bridge-arm switch (S12) and a second lower bridge-arm switch (S13) electrically connected in series, the second capacitor (C2), the first bridge arm and the second bridge arm are electrically connected in parallel, the first terminal and the second terminal of the first capacitor (C1) are electrically connected to a midpoint of the first bridge arm and a midpoint of the second bridge arm respectively, and the first inductor (L1) is electrically connected between the midpoint of the first bridge arm and the first terminal of the first capacitor (C1).

8. The energy storage module (1) according to claim 7, wherein when the energy storage module (1) enters the bypass mode, the first upper bridge-arm switch (S10) and the second upper bridge-arm switch (S12) are turned off, and the first lower bridge-arm switch (S11) and the second lower bridge-arm switch (S13) are turned on, wherein when a second capacitor voltage of the second capacitor (C2) is lower than a first threshold value, the first upper bridge-arm switch (S10) and the second upper bridge-arm (S12) switch are turned on;
or,
wherein when the energy storage module (1) enters the bypass mode, the first lower bridge-arm switch (S11) and the second lower bridge-arm switch (S13) are turned off, and the first upper bridge-arm switch (S10) and the second upper bridge-arm (S12) switch are turned on, wherein when the second capacitor voltage of the second capacitor (C2) is lower than the first threshold value, the first lower bridge-arm switch (S11) and the second lower bridge-arm switch (S13) are turned on.

9. The energy storage module (1) according to claim 8, wherein when the energy storage module (1) exits the bypass mode, the first upper bridge-arm switch (S10) and the second upper bridge-arm switch (S12) are turned off, or the first lower bridge-arm switch (S11) and the second lower bridge-arm switch (S13) are turned off,
wherein when the second capacitor voltage of the second capacitor (C2) is higher than a second threshold value, the first upper bridge-arm switch (S10), the second upper bridge-arm switch (S12), the first lower bridge-arm switch (S11) and the second lower bridge-arm switch (S13) are controlled to participate in an operation of the bidirectional isolated converter (4) and perform full-bridge switching.

10. The energy storage module (1) according to claim 7, wherein the bypass circuit (3) comprises a plurality of said full-bridge circuits electrically connected in parallel.

11. An energy storage module (1a), **characterized by** comprising:
a bus connection part (BUS), comprising a positive bus connection terminal (BUS+) and a negative bus connection terminal (BUS-);
a first battery pack (2), electrically connected between the positive bus connection terminal (BUS+) and the negative bus connection terminal (BUS-), and comprising a first positive battery terminal (B+) and a first negative battery terminal (B-);
a first capacitor (C1), electrically connected between the positive bus connection terminal (BUS+) and the first positive battery terminal (B+) or electrically connected between the negative bus connection terminal (BUS-) and the first negative battery terminal (B-);
a bidirectional isolated converter (4), comprising a first positive connection terminal (A+), a first negative connection terminal (A-), a second positive connection terminal (C+) and a second negative connection terminal (C-), wherein the first positive connection terminal (A+) and the first negative connection terminal (A-) are electrically connected to the positive bus connection terminal (BUS+) and the negative bus connection terminal (BUS-) respectively or are electrically connected to the first positive battery (B+) terminal and the first negative battery terminal (B-) respectively, and the second positive connection terminal (C+) and the second negative connection terminal (C-) are electrically connected to the first terminal and the second terminal of the first capacitor (C1) respectively;
a first bypass circuit (3a), disposed outside the bidirectional isolated converter (4) and electrically connected to the first terminal and the second terminal of the first capacitor (C1); and
a second bypass circuit (3b), integrated inside the bidirectional isolated converter (4) and electrically connected to the first terminal and the second terminal of the first capacitor (C1) through the second positive connection terminal (C+) and the second negative connection terminal (C-) respectively,
wherein when the energy storage module (1a) enters a bypass mode, the first bypass circuit (3a) or the second bypass circuit (3b) bypasses the first capacitor (C1).

12. The energy storage module (1a) according to claim 11, wherein the first bypass circuit (3a) comprises a driving circuit (30) and a bypass switching unit (31), and the driving circuit (30) controls the bypass switching unit (31) to turn on when the energy storage module (1a) enters the bypass mode,
wherein the bypass switching unit (31) comprises a bidirectional active switch or a mechanical switch, and the bidirectional active switch comprises two IGBTs (S1, S2), each electrically connected in series to a diode (D1, D2), electrically connected in antiparallel, two IGBTs (S3, S4), each integrated with a diode (D3, D4), electrically connected in anti-series, two MOSFETs (S5, S6) electrically connected in anti-series, or two thyristors (M1, M2) electrically connected in antiparallel.

13. The energy storage module (1a) according to claim 11, wherein the bidirectional isolated converter (4) comprises a second capacitor (C2), the second bypass circuit (3b) comprises a half-bridge circuit comprising a bridge arm and an inductor (L), the bridge arm comprises an upper bridge-arm switch (S8) and a lower bridge-arm switch (S9) electrically connected in series, the bridge arm and the second capacitor (C2) are electrically connected in parallel, two terminals of the lower bridge-arm switch (S9) are electrically connected to the first terminal and the second terminal of the first capacitor (C1) respectively, and the inductor (L) is electrically connected between a midpoint of the bridge arm and the first terminal of the first capacitor (C1),
wherein when the energy storage module (1a) enters the bypass mode, the upper bridge-arm switch (S8) is turned off continuously, and the lower bridge-arm switch (S9) is turned on continuously.

14. The energy storage module (1a) according to claim 11, wherein the bidirectional isolated converter (4) comprises a second capacitor (C2), the second bypass circuit (3b) comprises a full-bridge circuit comprising a first bridge arm, a second bridge arm and a first inductor (L1), the first bridge arm comprises a first upper bridge-arm switch (S10) and a first lower bridge-arm switch (S11) electrically connected in series, the second bridge arm comprises a second upper bridge-arm switch (S12) and a second lower bridge-arm switch (S13) electrically connected in series, the second capacitor (C2), the first bridge arm and the second bridge arm are electrically connected in parallel, the first terminal and the second terminal of the first capacitor (C1) are electrically connected to a midpoint of the first bridge arm and a midpoint of the second bridge arm respectively, and the first inductor (L1) is electrically connected between the midpoint of the first bridge arm and the first terminal of the first capacitor (L1).

15. The energy storage module (1a) according to claim 14, wherein when the energy storage module (1a) enters the bypass mode, the first upper bridge-arm switch (S10) and the second upper bridge-arm switch (S12) are turned off, and the first lower bridge-arm switch (S11) and the second lower bridge-arm switch (S13) are turned on, wherein when a second capacitor voltage of the second capacitor (C2) is lower than a first threshold value, the first upper bridge-arm switch (S10) and the second upper bridge-arm switch (512) are turned on,
or,
wherein when the energy storage module (1a) enters the bypass mode, the first lower bridge-arm switch (S11) and the second lower bridge-arm switch (S13) are turned off, and the first upper bridge-arm switch (S10) and the second upper bridge-arm (S12) switch are turned on, wherein when the second capacitor voltage of the second capacitor (C2) is lower than the first threshold value, the first lower bridge-arm switch (S11) and the second lower bridge-arm switch (S13) are turned on.
